# EUROPÄISCHE PATENTANMELDUNG

(11) **EP 4 799 880 A1**
(43) Veröffentlichungstag der Anmeldung: **02.09.2026**
(21) Anmeldenummer: 25160465.8
(22) Anmeldetag: 27.02.2025
(51) Int. Cl.: B60S 3/04

(54) **REINIGUNGSVORRICHTUNG FÜR EIN ZWEIRAD**

(71) Anmelder: CW Cleaning Solutions GmbH, 50678 Köln (DE)
(72) Erfinder: SACHIN, Kumar, 50678 Köln (DE)
(74) Vertreter: Angerhausen, Christoph

(57) **Zusammenfassung**

Die Erfindung betrifft eine Reinigungsvorrichtung zum Reinigen eines in der Reinigungsvorrichtung aufgenommenen Zweirads, insbesondere Fahrrads, aufweisend zumindest eine Reinigungsbürsteneinheit, welche über einen Motor der Reinigungsbürsteneinheit angetrieben in einer linearen Bewegung entlang des in der Reinigungsvorrichtung aufgenommenen Fahrrads führbar ist, um das Fahrrad mit der Reinigungsbürsteneinheit zu reinigen; und eine Rotationsvorrichtung, welche dazu ausgebildet ist, zumindest ein Laufrad des Fahrrads zu rotieren, um das Laufrad und/oder einen am Laufrad montierten Reifen zu reinigen; dadurch gekennzeichnet, dass die Reinigungsvorrichtung ein Getriebe aufweist, welches durch die lineare Bewegung antreibbar ist und dazu ausgebildet ist, die lineare Bewegung in eine Drehbewegung umzuwandeln und mit der Drehbewegung die Rotationsvorrichtung anzutreiben.

## Beschreibung

Die vorliegende Offenbarung bezieht sich auf eine Reinigungsvorrichtung für Zweiräder, vorzugsweise Fahrräder. Insbesondere betrifft die Offenbarung eine Vorrichtung zur effizienten und vollautomatisierten Reinigung von Zweirädern, wobei das Zweirad zumindest teilweise in der Reinigungsvorrichtung aufgenommen ist.

Üblicherweise werden Zweiräder manuell gereinigt, was zeitaufwendig und oft ineffizient ist. Bekannte Systeme zur Zweiradreinigung umfassen typischerweise einfache Handbürsten, Hochdruckreiniger oder andere Wasserquellen, die von Hand bedient werden müssen. Diese manuellen Methoden erfordern erhebliche körperliche Anstrengung und Zeit, um ein Zweirad gründlich zu reinigen. Automatisierte Reinigungssysteme für Fahrräder sind zwar bekannt, jedoch weisen diese oft Einschränkungen in Bezug auf die Effizienz und die Gründlichkeit der Reinigung auf. Die aus dem Stand der Technik bekannten Systeme haben hingegen den Nachteil, dass diese oft nicht in der Lage sind, schwer zugängliche Bereiche des Zweirads wie die Innenseiten der Laufräder oder die Kettenantriebe effektiv zu säubern.

Gemäß bekannter Technik umfassen einige automatisierte Systeme rotierende Bürsten, die das Zweirad reinigen sollen, welche über Motoren angetrieben und entlang eines zu säubernden Fahrrads geführt werden. Der Komplexität der Zweiradgeometrie ist es dabei geschuldet, dass für unterschiedliche Komponenten des Zweirads dedizierte Bürstensysteme zum Einsatz kommen, um beispielsweise eine gründliche Reinigung des Zweiradrahmens und der Laufräder bzw. Reifen zu erzielen. Durch eine komplizierte Mechanik mit einer Vielzahl von beweglichen Teilen sind diese Systeme jedoch häufig komplex und teuer in der Herstellung und insbesondere sehr wartungsanfällig. Ein besonderer Schwachpunkt sind Motoren der Reinigungsvorrichtung, welche die Antriebsleistung für die beweglichen Komponenten der Reinigungssysteme bereitstellen und den während der Reinigung verwendeten, teils aggressiven Reinigungsmitteln und Schmutzwasser ausgesetzt sind.

Trotz der Fortschritte auf dem Gebiet der automatisierten Zweiradreinigung besteht nach wie vor ein Bedarf an verbesserten Reinigungsvorrichtungen, die sowohl effizient, wartungsarm als auch gründlich arbeiten. Bekannte Systeme, die versuchen, diese Anforderungen zu erfüllen, sind oft mechanisch komplex und erfordern eine präzise Abstimmung der verschiedenen Komponenten, was die Zuverlässigkeit und Benutzerfreundlichkeit beeinträchtigen kann.

Es ist daher ein der vorliegenden Erfindung zugrunde liegendes technisches Problem, eine Reinigungsvorrichtung bereitzustellen, die wartungsfreundlicher und günstiger ist.

Eine entsprechende Reinigungsvorrichtung ist durch den Anspruch 1 beschrieben. Ansprüche 2 bis 15 beschreiben vorteilhafte Ausführungsformen der Reinigungsvorrichtung.

Die Erfindung geht aus von einer Reinigungsvorrichtung zum Reinigen eines in der Vorrichtung aufgenommenen Zweirads, aufweisend zumindest eine Reinigungsbürsteneinheit, welche über einen Motor der Reinigungsbürsteneinheit, vorzugsweise einen Anschubmotor für einen Schlitten der Reinigungsbürsteneinheit, angetrieben in einer linearen Bewegung entlang des in der Vorrichtung aufgenommenen Zweirads führbar ist, um das Zweirad mit der Reinigungsbürsteneinheit zu reinigen, eine Rotationsvorrichtung, welche dazu eingerichtet ist, zumindest ein Laufrad des Zweirads zu rotieren, um das Laufrad und/oder einen am Laufrad montierten Reifen zu reinigen.

Erfindungsgemäß weist die Reinigungsvorrichtung ein Getriebe auf, welches durch die lineare Bewegung antreibbar ist und dazu ausgebildet ist, die lineare Bewegung in eine Drehbewegung umzuwandeln und mit der Drehbewegung die Rotationsvorrichtung anzutreiben. Der Erfindung liegt somit der Gedanke zugrunde, dass ein dedizierter Motor für den Antrieb der Rotationseinrichtung entfällt und stattdessen die Antriebsleistung des Motors der Reinigungsbürsteneinheit genutzt wird, welcher die Antriebsleistung für die lineare Bewegung der Reinigungsbürsteneinheit bereitstellt. Als solches wird die Komplexität der Reinigungsverrichtung um eine teure Komponente reduziert. Mehr noch, da in gattungsgemäßen Reinigungssystemen die Rotationsvorrichtung funktionsbedingt unterhalb einer Fixierposition des Zweirads in Bodennähe angeordnet ist, sind die Bauelemente der Rotationsvorrichtung regelmäßig Reinigungsflüssigkeit und Schmutzwasser ausgesetzt, welche sich während des Reinigungsvorgangs in diesem Bereich der Vorrichtung sammeln. Als solches sind in den aus dem Stand der Technik bekannten Vorrichtungen die Motoren, welche die Rotationsvorrichtung antreiben, besonders anfällig für Defekte und bedürfen spezieller Dichtungssysteme. In der erfindungsgemäßen Vorrichtung entfällt ein entsprechender Motor, sodass die Wartungsfreundlichkeit erhöht ist.

Eine Reinigungsvorrichtung im Sinne der Erfindung ist eine Reinigungsvorrichtung, die speziell für die Reinigung eines Zweirads, beispielsweise ein Fahrrad, Motorrad, eScooter, Motorrollers, etc. konzipiert und dimensioniert ist. Die Reinigungsvorrichtung ist dazu ausgebildet, Fahrräder mit unterschiedlicher Rahmen- und Rädergeometrie zumindest teilweise aufzunehmen und während der Reinigung in der Vorrichtung zu fixieren. Eine Reinigungsbürsteneinheit im Kontext der Erfindung umfasst zumindest eine Bürste, vorzugsweise eine Vielzahl von Bürsten. Die Bürsten können einseitig oder beidseitig am Zweirad angeordnet sein. Die Bürsten können derart dimensioniert sein, dass sie sich entlang der gesamten Höhe oder Länge des Zweirads erstrecken und insbesondere bei der Reinigung Felgen bzw. Laufräder und Reifen erfassen. Die Bürste bzw. eine Vielzahl von Bürsten kann um eine horizontale oder vertikale Achse angetrieben rotiert werden. Die Antriebsleistung für diese Rotation kann von einem dedizierten Motor der Reinigungsbürsteneinheit bereitgestellt werden oder von dem Motor der Reinigungsbürsteneinheit, der die Antriebsleistung für die lineare Bewegung der Reinigungsbürsteneinheit bereitstellt. Die Reinigungsbürsteneinheit kann ferner Trocknereinheiten mit Gebläsen zum Trocknen des Zweirads nach/während des Reinigens aufweisen. Die Reinigungsbürsteneinheit kann zumindest eine Düse aufweisen, welche dazu eingerichtet ist, Wasser oder Reinigungsmittel auf das Zweirad und/oder die Bürste zu sprühen. Die Reinigungsbürsteneinheit wird in einer linearen Bewegung entlang des Zweirads bewegt, um die Reinigung effizient durchzuführen. Während der linearen Bewegung werden verschiedene Bereiche des Zweirads mit den Bürsten in Kontakt gebracht und gereinigt. Ferner wird der Winkel, mit dem die Borsten der Bürsten das Zweirad kontaktieren, variiert. Die Reinigungsbürsteneinheit kann dazu ausgebildet sein, das Zweirad beidseitig der Längsrichtung simultan zu reinigen. Alternativ kann die Reinigungsbürsteneinheit dazu ausgebildet sein, nur eine Längsseite des Zweirads zu reinigen. Vorzugsweise erfolgt diese lineare Bewegung parallel zu einer Längsrichtung des Zweirads. Die Reinigungsvorrichtung kann derart ausgebildet sein, dass sich die lineare Bewegung sich entlang der gesamten Länge des Zweirads, vorzugsweise über die gesamte Länge des Zweirads hinaus erstreckt. Die Reinigungsvorrichtung und/oder die Reinigungsbürsteneinheit können Führungselemente, beispielsweise Schienen oder Nuten, aufweisen, an denen die Reinigungsbürsteneinheit während der linearen Bewegung geführt ist. Eine Rotationsvorrichtung im Sinne der Erfindung ist eine Vorrichtung, welche dazu ausgebildet ist, mindestens ein Laufrad des Zweirads um eine Achse des Laufrads zu rotieren, wodurch sowohl das Laufrad als auch der darauf montierte Reifen aus unterschiedlichen Richtungen und Positionen gereinigt werden können. Hierzu kann die Rotationsvorrichtung eine zumindest eine Rolle, Walze oder Förderband aufweisen, welche ein Laufrad oder Reifen des Zweirads kontaktiert und die Drehbewegung an das Laufrad überträgt. Die Rotationseinrichtung kann dazu eingerichtet sein, ein Vorderrad, ein Hinterrad oder das Vorderrad und das Hinterrad simultan zu rotieren. Im Kontext der Erfindung ist ein Getriebe eine mechanische Vorrichtung, die zur Übertragung und Umwandlung einer Bewegungsform und Bewegungsrichtung und vorzugsweise Drehmoment und Drehzahl zwischen der Reinigungsbürsteneinheit und der Rotationsvorrichtung ausgebildet ist. Dieses Getriebe ist so konfiguriert und ausgebildet, dass es die lineare Bewegung in eine Drehbewegung umwandelt, die wiederum die Rotationsvorrichtung antreibt. Ein Vorteil dieser Konstruktion liegt in der effizienten Nutzung der Bewegungsenergie, da die lineare Bewegung direkt zur Erzeugung der notwendigen Drehbewegung genutzt wird. Auf diese Weise kann simultan ein einziger Motor der Reinigungsbürsteneinheit verwendet werden, um sowohl die Rahmenstruktur des Zweirads als auch die Laufräder und Reifen in einem einzigen Reinigungsvorgang zu behandeln, was die Reinigungszeit verkürzt und den Aufwand für den Benutzer reduziert. Motor im Sinne der Erfindung kann beispielsweise ein Wechselstrommotor oder ein Gleichstrommotor, besonders bevorzugt ein bürstenloser Gleichstrommotor sein. Die Reinigungsvorrichtung kann als stationäre Vorrichtung ausgebildet sein, welche fest bzw. ortsgebunden montiert sein kann. Alternativ kann die Reinigungsvorrichtung als mobile Vorrichtung ausgebildet sein, welche sich schnell demontieren/monieren lässt und platzsparend in einem großen PKW oder Nutzfahrzeug transportieren lässt. Die Vorrichtung kann eine Fixiervorrichtung aufweisen, welche eingerichtet ist, das Zweirad innerhalb der Reinigungsvorrichtung in einer Fixierposition zu halten. Die Vorrichtung kann derart ausgebildet sein, ein Zweirad bidirektional aufzunehmen, wobei das Zweirad wahlweise vorwärts oder rückwärts in der Fixierposition aufgenommen werden kann.

Die Reinigungsvorrichtung kann eine Flüssigkeitswanne aufweisen, in welcher das Zweirad zumindest teilweise aufnehmbar ist und welche bis zu einem Höchstpegel mit einer Flüssigkeit befüllbar ist. Der Motor der Reinigungsbürsteneinheit kann oberhalb des Höchstpegels angeordnet sein. Eine Flüssigkeit kann dabei beispielsweise Wasser, eine Reinigungsflüssigkeit bzw. eine Mischung dieser Flüssigkeiten sein. Die Wanne kann dazu dienen, sicherzustellen, dass die Reinigungsflüssigkeit gezielt eingesetzt und Schmutzwasser, welches während der Reinigung anfällt, aufgefangen wird, um eine gründliche Reinigung zu ermöglichen und die Umwelt nicht zu belasten. Durch die Aufnahme des Zweirads in die Wanne wird gewährleistet, dass die Reinigungsflüssigkeit effektiv auf die zu reinigenden Teile des Zweirads einwirken kann, insbesondere auf schwer zugängliche Bereiche wie die Reifen. Der Höchstpegel der Flüssigkeit in der Wanne ist so bemessen, dass eine optimale Benetzung der zu reinigenden Teile erreicht wird, ohne dass es zu einer Überflutung oder Beschädigung empfindlicher Komponenten kommt. Die Anordnung des Motors der Reinigungsbürsteneinheit oberhalb des Höchstpegels der Flüssigkeit bietet mehrere Vorteile. Erstens wird dadurch verhindert, dass der Motor der Reinigungsbürsteneinheit mit der Reinigungsflüssigkeit in Kontakt kommt, was die Lebensdauer und Zuverlässigkeit des Motors der Reinigungsbürsteneinheit erhöht, da Korrosion und andere durch Flüssigkeitseinwirkung verursachte Schäden vermieden werden. Zweitens ermöglicht diese Anordnung eine einfachere Wartung und Reinigung des Motors, da er leicht zugänglich bleibt und nicht aus der Flüssigkeit herausgehoben werden muss. Drittens trägt die Positionierung des Motors oberhalb des Höchstpegels zur Sicherheit des gesamten Reinigungssystems bei, indem das Risiko eines Kurzschlusses oder anderer elektrischer Probleme minimiert wird, die durch den Kontakt des Motors mit der Flüssigkeit entstehen könnten. Insgesamt verbessert die Integration einer Wanne mit einem definierten Höchstpegel und die strategische Platzierung des Motors die Effizienz und Sicherheit der Reinigungsvorrichtung, indem sie eine gründliche und schonende Reinigung des Zweirads ermöglicht und gleichzeitig die Langlebigkeit der mechanischen und elektrischen Komponenten sicherstellt. Insbesondere ermöglicht eine entsprechende Anordnung des Motors der Reinigungsbürsteneinheit, dass bei einer Verstopfung eines Überlaufs der Flüssigkeitswanne keine Gefahr der Beschädigung am Motor der Reinigungsbürsteneinheit besteht.

Die Reinigungsvorrichtung kann eine Laufradreinigungseinheit aufweisen, welche, wenn das Zweirad in der Vorrichtung aufgenommen ist, mit einer Bürste zumindest einen Teil des Laufrads und/oder Reifens kontaktiert. Ein Laufrad im Sinne der Erfindung kann ebenfalls eine Felge sein. Diese zusätzliche Reinigungsbürsteneinheit ergänzt die Funktionalität der bereits vorhandenen Reinigungsbürsteneinheit und der Rotationsvorrichtung, indem sie eine gezielte Reinigung des Laufrads ermöglicht. Die Laufradreinigungseinheit kann so positioniert sein, dass sie während einer vollen Umdrehung des Laufrads nahezu alle Oberflächen des Laufrads und/oder des Reifens kontaktiert. Dies kann durch eine strategische Anordnung der Reinigungsbürsteneinheit innerhalb der Vorrichtung erreicht werden, sodass eine effektive Reinigung der schwer zugänglichen Bereiche des Laufrads gewährleistet ist. Die Interaktion zwischen der Laufradreinigungseinheit und dem Laufrad erfolgt durch direkten physischen Kontakt und/oder Ultraschall, was eine gründliche Entfernung von Schmutz und Ablagerungen ermöglicht. Ein Vorteil dieser Anordnung ist die verbesserte Reinigungsleistung, da die Laufradreinigungseinheit speziell für die Reinigung von Bereichen konzipiert ist, die durch die lineare Bewegung der ersten Bürsteneinheit möglicherweise nicht vollständig erreicht werden. Die Laufradreinigungseinheit kann eine Vielzahl von Bürsten und/oder Ultraschallemittern aufweisen. Die Bürsten können horizontal und vertikal orientiert sein.

Darüber hinaus kann das Getriebe, die Laufradreinigungseinheit und/oder die Rotationsvorrichtung teilweise, vorzugsweise vollständig innerhalb der Flüssigkeitswanne aufgenommen sein. Diese Anordnung bietet mehrere Vorteile, die die Effizienz und Benutzerfreundlichkeit der Vorrichtung erhöhen. Die Anordnung der Komponenten innerhalb der Wanne ermöglicht eine kompaktere Bauweise der gesamten Reinigungsvorrichtung, was Platz spart und die Handhabung erleichtert und eine vereinfachte mobile Verwendung der Reinigungsvorrichtung ermöglicht. Darüber hinaus können das Getriebe und die Antriebsvorrichtung vollständig an einem Stützgerüst gelagert sein, welches vollständig in der Flüssigkeitswanne aufgenommen ist.

Das Getriebe kann ein Riemengetriebe sein. Ein Riemengetriebe im Sinne der Erfindung ist ein Mechanismus, bei dem zumindest ein flexibler Riemen verwendet wird, um mechanische Energie zwischen Riemenscheiben zu übertragen. In diesem Kontext wird das Riemengetriebe genutzt, um die lineare Bewegung der Reinigungsbürsteneinheit in eine Drehbewegung umzuwandeln, die dann die Rotationsvorrichtung antreibt. Das Riemengetriebe kann ferner beispielsweise Spannrollen, Spannschienen, Führungsrollen und/oder Riemenschutzvorrichtungen aufweisen.

Das Getriebe kann einen Antriebsriemen aufweisen, welcher vorzugsweise als Zahnriemen ausgeführt ist, und welcher derart mit der Reinigungsbürsteneinheit, vorzugsweise mit einem Schlitten der Reinigungsbürsteneinheit, verbunden ist, dass der Antriebsriemen bei der linearen Bewegung mitgenommen wird. Ein Schlitten im Sinne der Erfindung ist eine Komponente der Reinigungsbürsteneinheit, die die Reinigungsbürsteneinheit trägt und entlang einer Führungsschiene oder Führungsnut bewegt wird. Der Schlitten führt die Bürsteneinheit stabil entlang des in der Vorrichtung aufgenommenen Zweirads und gewährleistet eine gleichmäßige und kontrollierte Bewegung der Reinigungsbürsteneinheit. Der Schlitten kann ferner eine Strebe aufweisen, welche sich von dem Schlitten vertikal nach unten erstreckt und mit dem Antriebsriemen verbunden ist.

Das Getriebe kann eine Stufenscheibe mit einem mit dem Antriebsriemen umschlossenen Antriebsende und ein Abtriebsende aufweisen, welches von einem Abtriebsriemen, welcher vorzugsweise als Keilrippenriemen ausgeführt ist, umschlossen ist, über welchen die Rotationsvorrichtung antreibbar ist. Das Abtriebsende und das Abtriebsende sind als Riemenscheiben mit vorzugsweise unterschiedlichen Durchmessern ausgebildet und weisen eine Riemennut für den Antriebsriemen bzw. Abtriebsriemen auf. Die auf den Antriebsriemen übertragene lineare Bewegung wird auf das Antriebsende übertragen und versetzt die Stufenscheibe in eine Drehbewegung, welche durch das Abtriebsende und schließlich den Abtriebsriemen an die Rotationsvorrichtung übertragen wird.

Ein Durchmesser des Abtriebsendes kann größer als ein Durchmesser des Antriebsendes, vorzugsweise doppelt so groß wie der Durchmesser des Antriebsendes, sein. Unter Berücksichtigung des Durchmessers gattungsgemäßer Laufräder garantiert diese Konfiguration, dass bei einer linearen Bewegung der Reinigungsbürsteneinheit entlang der gesamten Länge des Zweirads das Laufrad um zumindest eine volle Umdrehung rotiert wird. Dies ermöglicht, dass das Laufrad von der Reinigungsbürsteneinheit und gegebenenfalls von der Laufradreinigungseinheit vollständig gereinigt wird. Vorzugsweise kann der Durchmesser des Antriebsendes und der Durchmesser des Abtriebsendes derart gewählt werden, dass, wenn die Bürsteneinrichtung eine lineare Bewegung über eine Distanz von einem Meter vollzieht, die Rotationseinrichtung das Laufrad um eine halbe Umdrehung rotiert.

Darüber hinaus kann das Getriebe dazu eingerichtet sein, unabhängig von einer Richtung der linearen Bewegung, die Rotationsvorrichtung derart anzutreiben, dass sich das Laufrad ausschließlich in eine einzige Richtung dreht, vorzugsweise in eine Vorwärtsrichtung des Laufrads dreht. Eine Richtung der linearen Bewegung im Kontext der Erfindung kann eine Bewegung der Reinigungsbürsteneinheit von der Hinterseite des Zweirads zur Vorderseite des Zweirads sein und/oder eine Bewegung der Reinigungsbürsteneinheit von der Vorderseite des Zweirads zur Rückseite des Zweirads. Die Vorwärtsrichtung des Laufrads entspricht der Rotationsrichtung des Laufrades, welche dieses einnehmen würde, wenn sich das Zweirad in Fahrtrichtung nach vorne bewegt. Dies bedeutet, dass das Getriebe eine Mechanik oder ein System enthält, das die Umwandlung der linearen Bewegung in eine gleichmäßige Drehbewegung sicherstellt, die stets in derselben Richtung erfolgt. Eine entsprechende Vorrichtung ermöglicht, auch ein Hinterrad eines ZweiradZweirads zu reinigen und die Reinigungsbürsteneinheit unter wiederholten Richtungswechseln entlang des Zweirads zu führen. Hierbei ist es essenziell, dass das Hinterrad ausschließlich vorwärts gedreht wird, da ansonsten die Wirkung des Freilaufs des Zweirads außer Kraft gesetzt wird und die Drehbewegung über die Kette des Zweirads schließlich an die Pedale übertragen wird. Hierbei besteht die Gefahr, dass die Pedale in die Bürsten der Reinigungsbürsteneinheit rotiert werden und sich dort verhaken. Dabei droht eine Beschädigung des Zweirads und der Reinigungsvorrichtung.

Das Antriebsende und das Abtriebsende der Stufenscheibe können über einen Freilauf verbunden sein, welcher dazu eingerichtet ist, ein Drehmoment vom Antriebsende auf das Abtriebsende nur in eine einzige Drehrichtung zu übertragen. Ein Freilauf im Sinne der Erfindung ist ein mechanisches Bauteil, das eine Drehbewegung in nur eine Richtung zulässt und in der entgegengesetzten Richtung blockiert. Dies bedeutet, dass der Freilauf sicherstellt, dass das Drehmoment, welches durch die lineare Bewegung der Reinigungsbürsteneinheit erzeugt wird, effizient, ohne Rückwirkung und insbesondere unabhängig von der Richtung der Bewegung ausschließlich in eine Richtung erfolgt. Der Vorteil eines solchen Freilaufs liegt darin, dass verhindert wird, dass die Rotationsvorrichtung das Laufrad rückwärts dreht und somit, wie oben beschrieben, Beschädigungen am Zweirad und an der Reinigungsvorrichtung entstehen. Der Freilauf kann beispielsweise als Sperrklinkenfreilauf, Rollenfreilauf, Nadellagerfreilauf oder Keilfreilauf ausgeführt sein. Der Freilauf kann so ausgeführt sein, dass die Richtung, in welche das Drehmoment übertragen wird, einstellbar ist. Die Stufenscheibe kann über einen Flansch an dem Stützgerüst drehbar befestigt sein. Dabei kann sich die Stufenscheibe durch das Stützgerüst hindurch erstrecken, sodass das Antriebsende an einem dem Zweirad abgewandten Seite des Stützgerüsts angeordnet ist und das Abtriebsende an einer dem Zweirad zugewandten Seite des Stützgerüst angeordnet ist.

Das Getriebe kann eine zweite Stufenscheibe mit einem durch den Antriebsriemen umschlossenen Abtriebsende und ein Abtriebsende aufweisen, welches von einem zweiten Abtriebsriemen umschlossen ist, über welchen die Rotationsvorrichtung antreibbar ist. Über den zweiten Abtriebsriemen kann in der Rotationsvorrichtung das Laufrad an einer zweiten Position rotiert werden. Dies kann zusätzlich zu dem Drehmoment erfolgen, welches durch den ersten Antriebsriemen bereitgestellt wird, oder ermöglichen, die Vorrichtung an Laufräder mit unterschiedlichen Durchmessern anzupassen und wahlweise die Rotationsvorrichtung mit dem Drehmoment des ersten Abtriebsriemens oder des zweiten Abtriebsriemens anzutreiben. Darüber hinaus kann beispielsweise mit dem Drehmoment des ersten Abtriebsriemens ein Vorderrad und mit dem Drehmoment des ersten Abtriebsriemens ein Hinterrad in der Rotationsvorrichtung rotiert werden. Die zweite Stufenscheibe kann ebenfalls einen Freilauf aufweisen. Der Freilauf der ersten Stufenscheibe und der Freilauf der zweiten Stufenscheibe können derart eingerichtet sein, dass unabhängig von der Richtung der linearen Bewegung jeweils nur ein Freilauf Drehmoment überträgt, während der andere Freilauf frei dreht. Hierdurch wird während der linearen Bewegung durch das Getriebe kontinuierlich Drehmoment an die Rotationsvorrichtung bereitgestellt und das Laufrad ausschließlich in eine Richtung gedreht.

Der Antriebsriemen kann ein offener Riemen sein, ein erstes Ende des Antriebsriemens und ein zweites Ende des Antriebsriemens können mit der ersten Reinigungsbürsteneinheit verbunden sein. Der Antriebsriemen kann das Antriebsende der jeweils ersten Stufenscheibe und der zweiten Stufenscheibe derart umschließen, dass sich die erste Stufenscheibe und die zweite Stufenscheibe in entgegengesetzte Richtungen drehen, wenn die lineare Bewegung erfolgt. Beispielsweise kann der Antriebsriemen zunächst im Uhrzeigersinn um die Antriebsende der ersten Stufenscheibe und anschließend entgegen des Uhrzeigersinns um die Antriebsende der ersten Stufenscheibe geschlungen sein und anschließend entgegen des Uhrzeigersinn um die Antriebsende der ersten Stufenscheibe geschlungen sein. Alternativ kann der Antriebsriemen über einen gekreuzten Trieb um die Antriebsende der ersten Stufenscheibe und die Antriebsende der zweiten Stufenscheibe geführt sein. Diese Konfiguration hat den Vorteil, dass unabhängig von der Richtung der linearen Bewegung der Reinigungsbürsteneinheit eine der beiden Stufenscheiben eine Drehbewegung durchführt, welche das Laufrad in eine Vorwärtsrichtung rotieren lässt. Als solches erfolgt während der Reinigung eine kontinuierliche Rotation des Laufrads in eine einzige Richtung, solange die Reinigungsbürsteneinheit linear entlang des Zweirads bewegt wird. Hierdurch wird die Effizienz der Reinigung erhöht und die Dauer des Reinigungsvorgangs reduziert.

Ferner kann die Rotationsvorrichtung zumindest eine Walze aufweisen, auf welche die Drehbewegung mittels des Abtriebsriemens übertragbar ist und welche, wenn das Zweirad in der Vorrichtung aufgenommen ist, das Laufrad und/oder einen am Laufrad montierten Reifen kontaktiert und dazu eingerichtet ist, das Laufrad zu rotieren. Der Abtriebsriemen dient als Übertragungsmechanismus, der die durch das Getriebe erzeugte Drehbewegung auf die Walze überträgt. Wenn das Zweirad in der Vorrichtung aufgenommen ist, kontaktiert die Walze das Laufrad und/oder den am Laufrad montierten Reifen. Die Verwendung einer Walze ermöglicht auf platzsparende Weise eine gleichmäßige und kontrollierte Rotation des Laufrads, welche im Wesentlichen unabhängig von dem Durchmesser des Laufrads, des Reifens oder eines Reifenprofils ist. Die Walze kann ferner Traktionselemente aufweisen, welche eine Reibkraft zwischen der Walze und dem Reifen erhöhen. Ein Traktionselement kann beispielsweise eine Gummi- oder Kunststoffbeschichtung der Walze sein. Alternativ kann das Traktionselement eine Geometrie aufweisen, welche komplementär zu einem Reifendurchmesser oder Reifenprofil ist. Ferner kann das Traktionselement eine Radführung aufweisen, in welchen ein Reifen aufnehmbar ist und welche dazu ausgebildet ist, den Reifen und das Laufrad in einer im Wesentlichen senkrechten Position zu halten. Die Radführung kann in Rotationsrichtung der Walze eine erste Ausnehmung mit einem ersten Radius und zweite Ausnehmung mit einen zweiten Radius aufweisen, welche jeweils für die Aufnahme von Reifen mit unterschiedlichen Durchmessern ausgebildet sind. Der erste Radius kann kleiner sein als der zweite Radius und die erste Ausnehmung kann in Radialrichtung der Walze unterhalb des zweiten Ausnehmung angeordnet sein, sodass ein Reifen von oben eingesetzt werden kann und automatisch in der geeigneten Ausnehmung zentriert wird.

Die Rotationsvorrichtung kann dazu eingerichtet sein, ein vorderes Laufrad und ein hinteres Laufrad des Zweirads zu rotieren. Diese Ausführungsform erweitert die Funktionalität der Rotationsvorrichtung, indem sie sicherstellt, dass beide Laufräder des Zweirads während des Reinigungsprozesses gedreht werden können. Dies ist besonders vorteilhaft, da es eine umfassendere Reinigung der Laufräder und der darauf montierten Reifen ermöglicht. Die Fähigkeit, beide Laufräder zu rotieren, kann dazu beitragen, Schmutz und Ablagerungen effektiver zu entfernen, die sich während des Gebrauchs des Zweirads ansammeln. Die Interaktion zwischen den Komponenten der Reinigungsvorrichtung wird durch die Integration eines Getriebes erleichtert, das die lineare Bewegung der Reinigungsbürsteneinheit in eine Drehbewegung umwandelt, um die Rotationsvorrichtung anzutreiben. Diese Umwandlung der Bewegungsart ermöglicht es der Vorrichtung, die Energie effizient zu nutzen, die durch die lineare Bewegung der Reinigungsbürsteneinheit erzeugt wird, um die Laufräder in Rotation zu versetzen. Die Rotationsvorrichtung ist so konzipiert, dass sie die Laufräder unabhängig voneinander oder gleichzeitig drehen kann, was Flexibilität im Reinigungsprozess bietet. Ein Vorteil dieser Konstruktion ist die Möglichkeit, den Reinigungsprozess zu optimieren, indem beide Laufräder gleichzeitig gereinigt werden, was die Reinigungszeit verkürzt und die Effizienz der Vorrichtung erhöht. Darüber hinaus kann die gleichzeitige Rotation der Laufräder dazu beitragen, die gleichmäßige Verteilung von Reinigungsmitteln zu gewährleisten, was zu einem besseren Reinigungsergebnis führt. Die Reinigungsvorrichtung und insbesondere das Getriebe können so gestaltet sein, dass sie unterschiedliche Rotationsgeschwindigkeiten für das vordere und hintere Laufrad ermöglichen, um den spezifischen Reinigungsanforderungen verschiedener Zweiradtypen gerecht zu werden.

Abschließend kann die Rotationsvorrichtung zumindest eine zweite Walze aufweisen. Die zweite Walze kann durch einen mit der ersten Welle verbundenen Übertragungsriemen angetrieben sein. Der Übertragungsriemen, der die erste und die zweite Walze verbindet, gewährleistet eine synchrone Bewegung beider Walzen, wodurch ein Laufrad über die erste und die zweite Walze rotiert werden kann oder Laufräder mit unterschiedlichem Durchmesser bedingt durch die Positionierung der ersten und zweiten Walze in der Reinigungsvorrichtung entweder durch die erste oder zweite Walze rotiert werden.

Weitere Einzelheiten der Erfindung werden anhand der nachstehenden Figuren erläutert. Dabei zeigt
- Figur 1:: eine isometrische Ansicht ausgewählter Komponenten einer erfindungsgemäßen Ausführungsform einer Reinigungsvorrichtung zum Reinigen eines Fahrrads.
- Figur 2: eine erste Schnittdarstellung ausgewählter Komponenten der erfindungsgemäßen Ausführungsform einer Reinigungsvorrichtung zum Reinigen eines Fahrrads.
- Figur 3: eine zweite Schnittdarstellung ausgewählter Komponenten der erfindungsgemäßen Ausführungsform einer Reinigungsvorrichtung zum Reinigen eines Fahrrads.
- Figur 4: eine dritte Schnittdarstellung ausgewählter Komponenten der erfindungsgemäßen Ausführungsform einer Reinigungsvorrichtung zum Reinigen eines Fahrrads.
- Figur 5: eine isometrische Ansicht einer Ausführungsform einer Stufenscheibe mit einem Antriebsende und einem Abtriebsende.
- Figur 6: eine Schnittdarstellung der Ausführungsform einer Stufenscheibe mit einem Antriebsende und einem Abtriebsende.

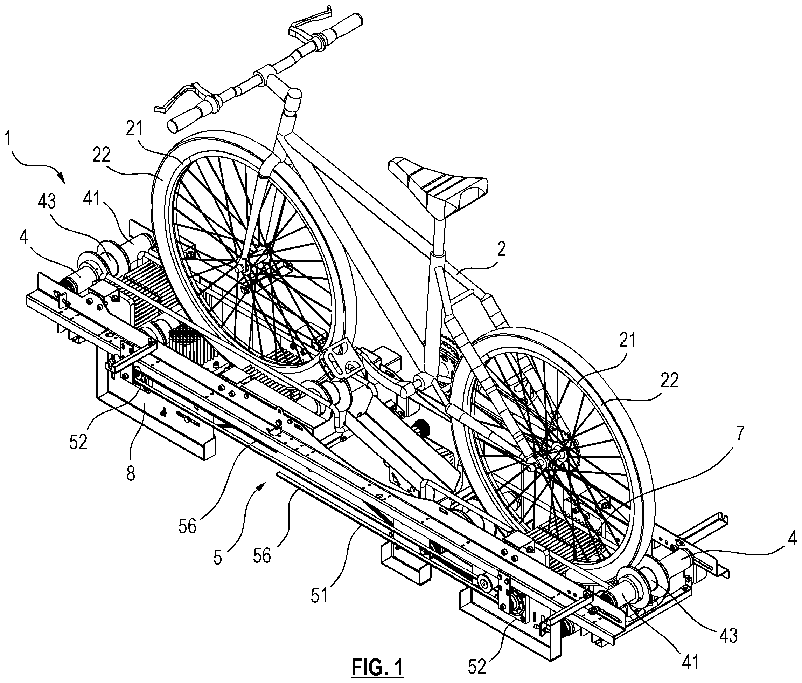

Figur 1 zeigt eine isometrische Ansicht ausgewählter Komponenten einer erfindungsgemäßen Ausführungsform einer Reinigungsvorrichtung 1 zum Reinigen eines Fahrrads 2. In den folgenden Figuren sind Komponenten der Reinigungsvorrichtung aus Gründen der Übersichtlichkeit selektiv dargestellt. In der dargestellten Konfiguration ist ein Fahrrad 3 in der Reinigungsvorrichtung 2 aufgenommen. Die Vorrichtung ist derart konfiguriert, dass das Fahrrad in der dargestellten Fixierposition in der Reinigungsvorrichtung 2 aufgenommen sein kann oder in einer alternativen Fixierposition, wobei das Fahrrad in umgekehrter Längsrichtung in der Reinigungsvorrichtung aufgenommen ist, d.h. in einer Fixierposition, in der sich das Vorderrad 21 des Fahrrads in der dargestellten Position des Hinterrades 21 befindet. Dargestellt ist ferner eine Rotationsvorrichtung 4, welche dazu ausgebildet ist, die Laufräder 21 des Fahrrads 2 zu rotieren, um die Laufräder 21 und/oder die an den Laufrädern 21 montierten Reifen 22 zu reinigen. Die Rotationsvorrichtung 4 umfasst eine Vielzahl von Walzen 41, die das Laufrad 21 kontaktieren und in Rotation versetzen. Dabei weist die Rotationsvorrichtung 4 jeweils drei Walzen 41 für jedes Laufrad 21 auf, welche angeordnet sind, sodass unabhängig von der Fixierposition des Fahrrads 2 und der Rahmen- bzw. Laufradgeometrie jederzeit jeweils zumindest eine der Walzen 41 mit einem der Laufräder 21 in Kontakt steht. An den Walzen 41 sind Traktionselemente 43 angebracht, welche die Reibung zwischen der Walze 41 und den Laufrädern 43 erhöhen, um eine effektive Drehung zu gewährleisten.

Hinsichtlich der Reinigung des Fahrrads 2 erfüllt die Rotation der Laufräder 21 eine Doppelfunktion: Die zunächst an der Unterseite der Laufräder 21 orientierten und für eine Reinigungsbürsteneinheit 3 (nicht dargestellt) unzugänglichen Oberflächen der Laufräder 21 werden während des Reinigungsvorgangs rotiert und können somit in Kontakt mit den Bürsten der Reinigungsbürsteneinheit 3 gebracht werden. Darüber hinaus weist die Reinigungsvorrichtung eine Reinigungsvorrichtung eine Laufradreinigungseinheit 7 auf, welche mit einer Vielzahl von Bürsten zumindest einen Teil des Laufrads 21 und des Reifens 22 kontaktiert. Diese Reinigungsbürsten sind speziell für die Reinigung des Laufrads 21 und des Reifens 22 vorgesehen, wobei die durch die Rotationsvorrichtung aufgebrachte Rotation die Oberflächen der Laufräder 21 bzw. Reifen 22 relativ zu den Reinigungsbürsten bewegt, somit die Reinigungseffizienz erhöht und Schmutz an schwer zugänglichen Stellen, beispielsweise im Profil der Reifen 22, entfernt.

Ein zentrales Merkmal der Reinigungsvorrichtung 1 ist das Getriebe 5, das durch die lineare Bewegung der Reinigungsbürsteneinheit 3 angetrieben wird. Das Getriebe 5 ist so konzipiert, dass es die lineare Bewegung in eine Drehbewegung umwandelt, die wiederum verwendet wird, um die Rotationsvorrichtung 4 anzutreiben. Das Getriebe 5 ist als Riemengetriebe ausgeführt und beinhaltet einen Antriebsriemen 51, der mit der Reinigungsbürsteneinheit 3 verbunden ist. Das Getriebe 5 umfasst weiterhin zwei Stufenscheiben 52, die jeweils mit einem mit dem Antriebsriemen 51 umschlossenen Antriebsende 54 und ein Abtriebsende 54 aufweisen. Die Abtriebsenden 54 sind jeweils mit einem Abtriebsriemen 57 umschlossen, über welchen die Rotationsvorrichtung antreibbar ist.

Für eine kompakte und wartungsfreundliche Bauweise der Reinigungsvorrichtung 1 sind sämtliche Baugruppen des Getriebes 5 und der Antriebvorrichtung 4 vollständig an einem Stützgerüst 8 gelagert, welches diese Komponenten sowie das in der Fixierposition aufgenommene Fahrrad in horizontaler und vertikaler Richtung stützt.

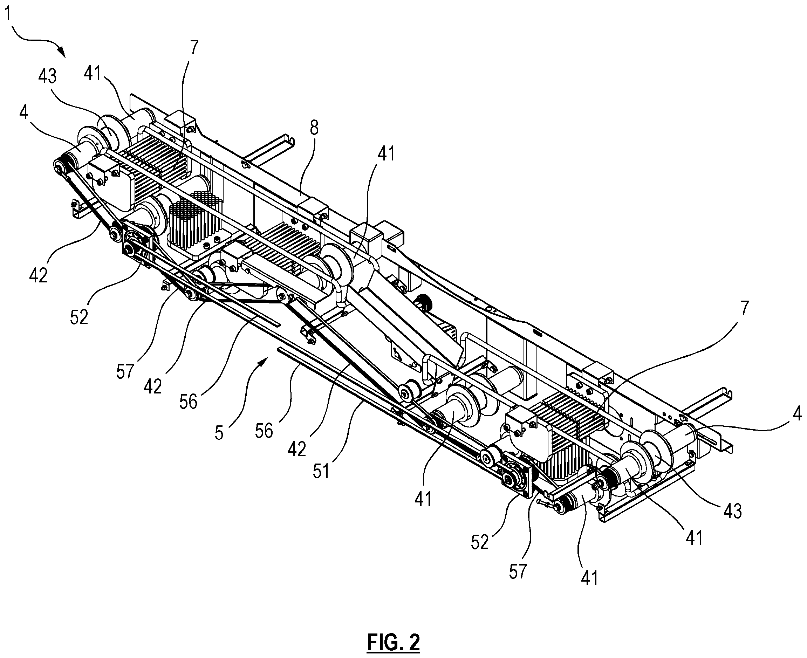

Weitere Details des Getriebes 5 und der zweiten Reinigungsbürsteneinheit 7 sind in Figur 2 abgebildet, wobei eine Seite des Stützgerüsts 8 aus Gründen der Anschaulichkeit nicht dargestellt ist. In Figur 2 ist deutlich zu erkennen, dass der Antriebsriemen 51 als offener Riemen mit einem ersten und einem zweiten freien Ende 56 ausgebildet ist. Der Antriebsriemen 51 umschließt die Antriebsende 53 der Stufenscheiben 52 derart, dass sich die Stufenscheiben 52 in entgegengesetzte Richtungen drehen, wenn der Antriebsriemen 51 von der linearen Bewegung der Reinigungsbürsteneinheit 3 mitgenommen wird. Hierzu ist der Antriebsriemen 51 zunächst entgegen des Uhrzeigersinns um das Antriebsende 53 der linken Stufenscheibe 52 und anschließend im Uhrzeigersinn um das Antriebsende 53 der rechten Stufenscheibe 52 geschlungen und anschließend im Uhrzeigersinn um das Antriebsende 53 der rechten Stufenscheibe 52 geschlungen. Dies ermöglicht, dass unabhängig von der Richtung der linearen Bewegung eine der beiden Stufenscheiben 52 in eine Drehbewegung versetzt wird, welche die Rotationsvorrichtung 4 derart antreibt, dass sich das Laufrad 21 ausschließlich in die Vorwärtsrichtung des Laufrads 21 dreht. Dass sich dabei das an den Stufenscheiben 52 anliegende und gegenläufig wirkende Drehmoment nicht gegenseitig blockiert, wird durch einen Freilauf 55 ermöglicht, der jeweils zwischen dem Antriebsende 53 und dem Abtriebsende 54 der Stufenscheibe 52 angeordnet ist. Der Freilauf 55 ist so eingerichtet, dass er ein Drehmoment nur in eine Drehrichtung überträgt. Für die Vermeidung von Beschädigungen am Fahrrad 2 und an der Reinigungsvorrichtung 1 ist es essenziell, dass das Hinterrad 21 des Fahrrads 2 ausschließlich in die Vorwärtsrichtung dreht. Wie in der Abbildung 2 ebenfalls gut zu erkennen ist, wird ein Drehmoment von den Stufenscheiben 52 von den Abtriebsenden 54 über Abtriebsriemen 57 an jeweils eine der Walzen 41 übertragen. Danach erfolgt die Verteilung des Drehmoments über Übertragungsriemen 42, welche die von der Stufenscheibe 52 angetriebenen Walzen 42 mit den anderen Walzen 41 verbinden.

Zusätzlich zeigt Figur 2, dass die Laufradreinigungseinheit 7 eine Vielzahl von Bürsten aufweist, welche horizontal und vertikal ausgerichtet und angeordnet sind, um sowohl den unteren Bereich des Vorderrads 21 als auch des Hinterrads 21 zu kontaktieren.

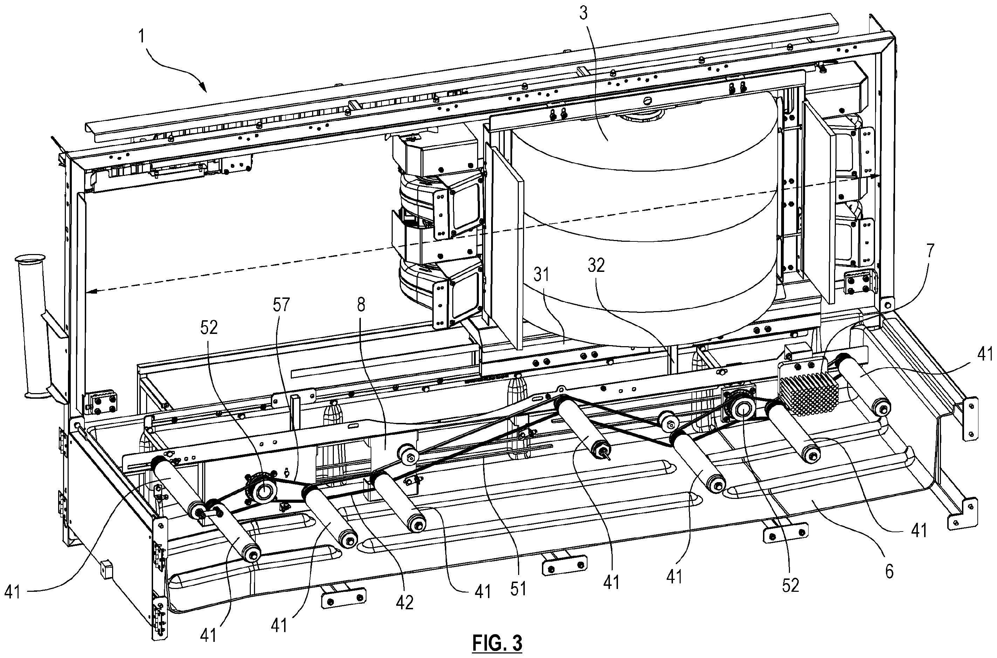

Figur 3 zeigt eine weitere Schnittdarstellung ausgewählter Komponenten der Ausführungsform. Dargestellt sind die in den Figuren 1 und 2 gezeigten Rotationvorrichtung 4 und Getriebe 5 im mechanische Zusammenwirken mit der Reinigungsbürsteneinheit 3, die über einen Motor (nicht dargestellt) angetrieben in einer linearen Bewegung, symbolisch dargestellt durch den Doppelpfeil, entlang des Fahrrads 2 geführt werden kann. Die Reinigungsbürsteneinheit 3 ist auf einem Schlitten 31 aufweist, der entlang zweier Führungsschiene bewegt wird, die in vertikaler Richtung übereinander und parallel zur Längsrichtung des Fahrrads 2 angeordnet sind. Die Reinigungsbürsteneinheit 3 weist zwei Reinigungsbürsten auf, welche auf dem Schlitten 31 montiert sind und um eine vertikale Achse rotierbar sind. Antrieb für dies Rotation der Bürsten kann von dem Motor bereitgestellt werden oder durch einen dedizierten Motor erfolgen. Neben den Bürsten ist ein Gebläse auf dem Schlitten 31 montiert, welcher zum Trocknen des Fahrrads 2 eingerichtet ist.

Die Reinigungsvorrichtung 1 weist eine Wanne 6 auf, in welcher das Fahrrad 2 bis zu einem Höchstpegel mit einer Flüssigkeit befüllbar ist. Der Motor ist beispielsweise in den Schlitten 31 integriert und somit oberhalb des Höchstpegels angeordnet. Das Getriebe, die Laufradreinigungseinheit 7 und die Rotationsvorrichtung 4 sind vollständig innerhalb der Wanne aufgenommen und das Stützgerüst 8 an Rändern der Wanne 6 fixiert.

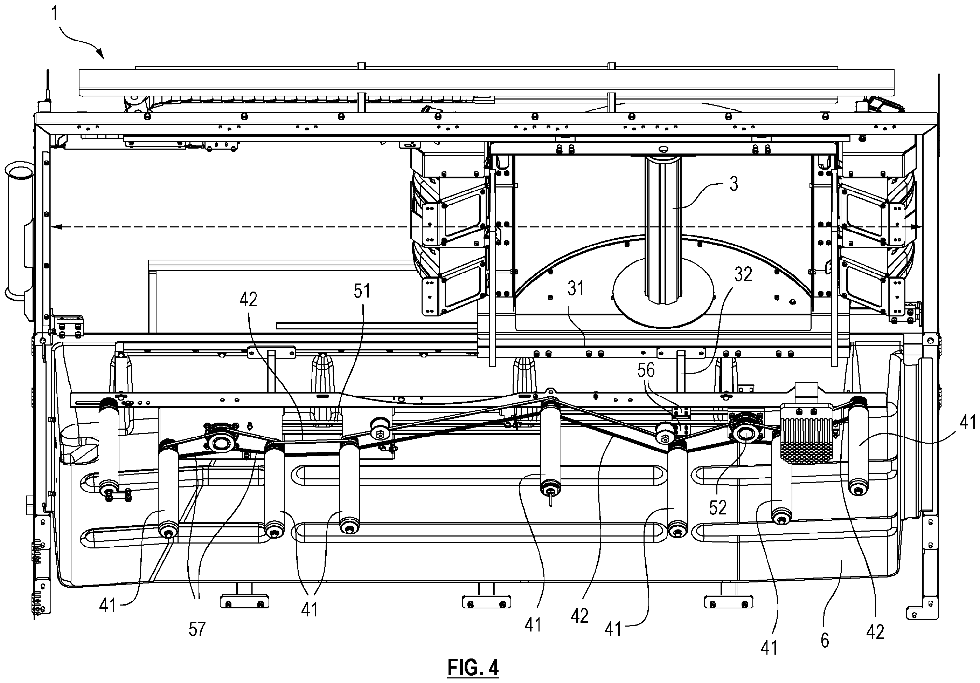

Wie in der Ansicht in der Figur 4 deutlich erkennbar ist, weist der Schlitten 31 eine Strebe 32 auf, welche sich von dem Schlitten 31 vertikal nach unten erstreckt, in die Wanne 6 ragt und und mit dem Antriebsriemen 51 verbunden ist. Dabei ist ein erstes Ende des Antriebsriemens 56 und ein zweites Ende des Antriebsriemens 56 über die Strebe 32 mit der Reinigungsbürsteneinheit 3 verbunden.

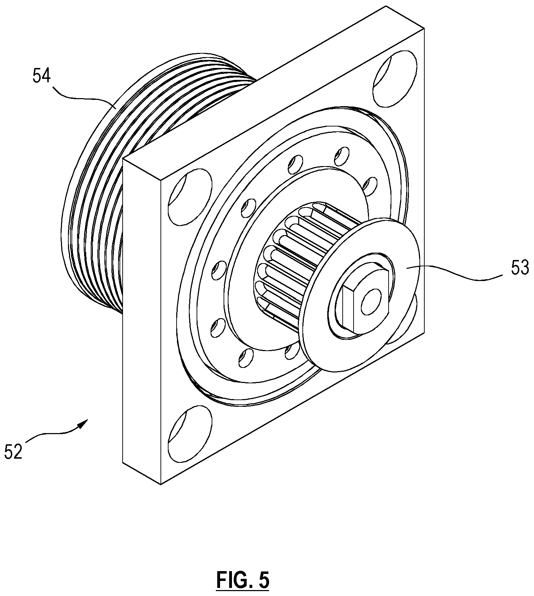

Abbildung 5 zeigt eine perspektivische Detailansicht einer Stufenscheibe 52, die Teil eines Getriebes 5 in einer Reinigungsvorrichtung ist. Die Stufenscheibe 52 umfasst ein Antriebsende 53 und ein Abtriebsende 54 und einen Flansch, mit welchem die Stufenscheibe an dem Stützgerüst 8 festgelegt werden kann. Der Durchmesser des Abtriebsendes 54 größer als der Durchmesser des Antriebsendes 53 wodurch gewährleistet wird, dass bei einer linearen Bewegung der Reinigungsbürsteneinheit 3 entlang der gesamten Länge des Fahrrads, die Laufräder 21 um zumindest eine volle Umdrehung rotiert werden.

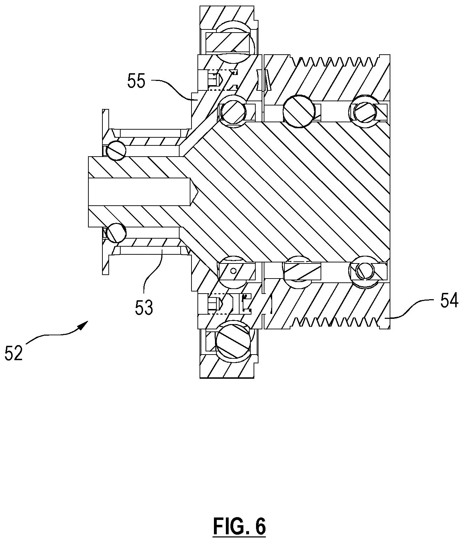

Abbildung 6 zeigt einen Querschnitt der Stufenscheibe 52, der die interne Struktur und die Verbindungselemente detailliert darstellt. Der Querschnitt verdeutlicht die Anordnung des Freilaufs 55, der zwischen dem Antriebsende 53 und dem Abtriebsende 54 positioniert ist. Der Freilauf 55 ist so eingerichtet, dass er ein Drehmoment nur in eine einzige Drehrichtung überträgt, was im Zusammenwirken zweier Stufenscheiben 55 sicherstellt, dass sich die Laufräder 21 des Fahrrads 2 unabhängig von der Richtung der linearen Bewegung der Reinigungsbürsteneinheit stets in eine Vorwärtsrichtung dreht.

### Bezugszeichenliste

- 1: Reinigungsvorrichtung
- 2: Fahrrad
- 3: Reinigungsbürsteneinheit
- 4: Rotationsvorrichtung
- 5: Getriebe
- 6: Wanne
- 7: Laufradreinigungseinheit
- 8: Stützgerüst
- 21: Laufrad
- 22: Reifen
- 31: Schlitten
- 32: Strebe
- 41: Walze
- 42: Übertragungsriemen
- 43: Traktionselement
- 51: Antriebsriemen
- 52: Stufenscheibe
- 53: Antriebsende
- 54: Abtriebsende
- 55: Freilauf
- 56: Ende des Antriebsriemens
- 57: Abtriebsriemen

## Patentansprüche

1. Reinigungsvorrichtung (1) zum Reinigen eines in der Reinigungsvorrichtung aufgenommenen Zweirads, vorzugsweise eines Fahrrads (2), aufweisend
zumindest eine Reinigungsbürsteneinheit (3), welche über einen Motor der Reinigungsbürsteneinheit (3) angetrieben in einer linearen Bewegung entlang des in der Reinigungsvorrichtung aufgenommenen Zweirads (2) führbar ist, um das Zweirad (2) mit der Reinigungsbürsteneinheit (3) zu reinigen; und
eine Rotationsvorrichtung (4), welche dazu ausgebildet ist, zumindest ein Laufrad (21) des Zweirads (2) zu rotieren, um das Laufrad (21) und/oder einen am Laufrad (21) montierten Reifen (22) zu reinigen;
**dadurch gekennzeichnet, dass** die Reinigungsvorrichtung (1) ein Getriebe (5) aufweist, welches durch die lineare Bewegung antreibbar ist und dazu ausgebildet ist, die lineare Bewegung in eine Drehbewegung umzuwandeln und mit der Drehbewegung die Rotationsvorrichtung (4) anzutreiben.

2. Reinigungsvorrichtung (1) nach Anspruch 1, wobei die Reinigungsvorrichtung (1) eine Wanne (6) aufweist, in welcher das Zweirad (2) zumindest teilweise aufnehmbar ist und welche bis zu einem Höchstpegel mit einer Flüssigkeit befüllbar ist, und wobei der Motor der Reinigungsbürsteneinheit (3) oberhalb des Höchstpegels angeordnet ist.

3. Reinigungsvorrichtung (1) nach Anspruch 2 oder 3, wobei die Reinigungsvorrichtung (1) eine Laufradreinigungseinheit zum Reinigen des Laufrads (21) und/oder des Reifens (22) aufweist, welche, wenn das Zweirad (2) in der Vorrichtung aufgenommen ist, mit einer Bürste jederzeit zumindest einen Teil des Laufrads (21) und/oder des Reifens (22) kontaktiert.

4. Reinigungsvorrichtung (1) nach Anspruch 3, wobei das Getriebe (5), die Laufradreinigungseinheit (7) und/oder die Rotationsvorrichtung (4) teilweise, vorzugsweise vollständig innerhalb der Wanne (6) aufgenommen sind.

5. Reinigungsvorrichtung (1) nach einem der vorangegangenen Ansprüche, wobei das Getriebe (5) ein Riemengetriebe ist.

6. Reinigungsvorrichtung (1) nach Anspruch 5, wobei das Getriebe (5) einen Antriebsriemen (51, 56) aufweist, welcher vorzugsweise als Zahnriemen ausgeführt ist, welcher derart mit der Reinigungsbürsteneinheit (3), vorzugsweise mit einem Schlitten (31) der Reinigungsbürsteneinheit (3), verbunden ist, sodass der Antriebsriemen (51, 56) bei der linearen Bewegung mitgenommen wird.

7. Reinigungsvorrichtung (1) nach Anspruch 6, wobei das Getriebe (5) eine Stufenscheibe (52) mit einem mit dem Antriebsriemen (51, 56) umschlossenen Abtriebsende (54) und ein Abtriebsende (54) aufweist, welches von einem Abtriebsriemen (57), welcher vorzugsweise als Keilrippenriemen ausgeführt ist, umschlossen ist, über welchen die Rotationsvorrichtung (4) antreibbar ist.

8. Reinigungsvorrichtung (1) nach Anspruch 7, wobei ein Durchmesser des Abtriebsendes (54) größer als ein Durchmesser des Antriebsendes (53), vorzugsweise doppelt so groß wie der Durchmesser des Antriebsendes (53) ist.

9. Reinigungsvorrichtung (1) nach einem der Ansprüche 7 bis 8, wobei das Getriebe (5) dazu eingerichtet ist, unabhängig von einer Richtung der linearen Bewegung, die Rotationsvorrichtung (4) derart anzutreiben, dass sich das Laufrad (21) ausschließlich in eine einzige Richtung dreht, vorzugsweise in eine Vorwärtsrichtung des Laufrads (2) dreht.

10. Reinigungsvorrichtung (1) nach Anspruch 9, wobei das Antriebsende (53) und das Abtriebsende der Stufenscheibe (52) über einen Freilauf (55) verbunden sind, welcher dazu eingerichtet ist, ein Drehmoment von dem Antriebsende (53) auf das Abtriebsende (54) nur in eine einzige Drehrichtung zu übertragen.

11. Reinigungsvorrichtung (1) nach einem der Ansprüche 7 bis 10, wobei das Getriebe (5) eine zweite Stufenscheibe mit einem durch den Antriebsriemen (51, 56) umschlossenen Abtriebsende (54) und ein Abtriebsende (54) aufweist, welches von einem zweiten Abtriebsriemen umschlossen ist, über welchen die Rotationsvorrichtung (4) antreibbar ist.

12. Reinigungsvorrichtung (1) nach Anspruch 11, wobei der Antriebsriemen (51, 56) ein offener Riemen ist, ein erstes Ende des Antriebsriemens (56) und ein zweites Ende des Antriebsriemens (56) mit der Reinigungsbürsteneinheit (3) verbunden sind und wobei der Antriebsriemen (51, 56) die Antriebsenden der jeweiligen ersten Stufenscheibe (52) und zweiten Stufenscheibe (52) derart umschließt, dass sich die erste Stufenscheibe und die zweite Stufenscheibe in entgegengesetzte Richtungen drehen, wenn die lineare Bewegung erfolgt.

13. Reinigungsvorrichtung (1) nach einem der Ansprüche 6 bis 12, wobei die Rotationsvorrichtung (4) zumindest eine Walze (41) aufweist, auf welche die Drehbewegung mittels des Abtriebsriemens (57) übertragbar ist und welche, wenn das Zweirad (2) in der Vorrichtung aufgenommen ist, das Laufrad (21) und/oder einen am Laufrad (21) montierten Reifen (22) kontaktiert und dazu eingerichtet ist, das Laufrad (21) zu rotieren.

14. Reinigungsvorrichtung (1) nach einem der Ansprüche 6 bis 13, wobei die Rotationsvorrichtung (4) dazu ausgebildet ist, ein vorderes Laufrad und ein hinteres Laufrad (21) des Zweirads (2) zu rotieren.

15. Reinigungsvorrichtung (1) nach Anspruch 14, wobei die Rotationsvorrichtung (4) zumindest eine zweite Walze (41) mit einem darauf montierten Traktionselement (43) aufweist und wobei die zweite Walze (41) durch einen mit der ersten Walze (41) verbundenen Übertragungsriemen (42) antreibbar ist.
